# EUROPEAN PATENT APPLICATION

(11) **EP 4 617 308 A1**
(43) Date of publication of application: **17.09.2025**
(21) Application number: 23912664.2
(22) Date of filing: 11.12.2023
(51) Int. Cl.: C08K 9/12, C08K 3/08, C08K 3/34, C08J 9/00, C08J 9/10

(54) **FOAMING AGENT ADDITIVE FOR REDUCING FORMAMIDE, AND FOAMING AGENT COMPOSITION COMPRISING SAME**

(30) Priority: 26.12.2022 KR 20220184129
(71) Applicant: Dongjin Semichem Co., Ltd., Incheon 22824 (KR)
(72) Inventor: SHIN, Min Seung, Hwaseong-si, Gyeonggi-do 18635 (KR); HWANG, Jeong Sik, Hwaseong-si, Gyeonggi-do 18635 (KR); KIM, Young Gi, Hwaseong-si, Gyeonggi-do 18635 (KR); KIM, Yeon Wook, Hwaseong-si, Gyeonggi-do 18635 (KR); PARK, Ji Hyeon, Hwaseong-si, Gyeonggi-do 18635 (KR)
(74) Representative: Grünecker Patent- und Rechtsanwälte PartG mbB
(86) International application number: PCT/KR2023/020299
(87) International publication number: WO 2024/143989

(57) **Abstract**

Provided in the present disclosure are a foaming agent additive for reducing formamide and a foaming agent composition using the same, the additive significantly reducing the concentration of formamide generated during foaming of ADCA, and enabling the concentration of formamide remaining in a final product foam to be reduced.

## Description

### Technical Field

The present disclosure relates to a foaming agent additive for reducing formamide capable of reducing a concentration of formamide generated in a foaming agent such as ADCA and reducing a concentration of formamide remaining in a final product foam, and a foaming agent composition including the same.

### Background Art

A foaming agent is a synthetic resin additive for preparing a porous foam by being mixed with a synthetic resin, and is a material that supplies gas to form bubbles for foaming molding.

Among the foaming agents, azodicarbonamide (hereinafter, ADCA) is a chemical foaming agent that is used as an additive for various plastics such as EVA, PE, PVC and PP, and occupies a majority of the foaming agent market due to many advantages such as high foaming magnification, low unit price and efficient control of decomposition temperature.

However, when commonly used ADCA is thermally decomposed during foaming, a large amount of formamide is generated along with N₂ gas, which causes problems in the working environment, and causes environmental issues when commercialized due to the release of formamide.

Accordingly, in order to remove formamide generated from ADCA, physical removal using adsorbents, chemical removal, acidic substances using acid and base reactions, and the like are used.

However, ADCA foams at a high temperature of 200°C to 230°C, and therefore, a phenomenon in which formamide is adsorbed and then desorbed again at a high temperature occurs in the case of an adsorbent of ADCA. In addition thereto, existing adsorbents have a varied and poor formamide reducing concentration depending on the foaming condition, and the performance greatly declines. In addition, there is a problem in that defects may be caused in a foamed foam when using acids and bases.

In this regard, Korean Patent No. 10-1915690 discloses a method for capturing and reducing harmful substances generated during thermal decomposition of an azo-based foaming compound using a porous metal oxide. However, such a method has a problem of, even when an formamide reducing effect of is obtained, causing side effects in a foamed foam and changing foaming properties.

In addition, Korean Patent Application Laid-Open Nos. 2005-0101689, 2017-0103764 and 2005-0069178 disclose methods for removing toxic gas by impregnating a metal into a porous material, however, these methods are intended to remove toxic gas such as combustion exhaust gas or carbon monoxide, and do not recognize a method for reducing formamide, a harmful substance, from ADCA.

### DISCLOSURE

### Technical Problem

The present disclosure is directed to providing a foaming agent additive for reducing formamide capable of more effectively reducing formamide from a foaming agent by impregnating one or more types of metals including Cu into a porous material such as a zeolite.

In addition, the present specification is directed to providing a foaming composition having a formamide concentration of a foam being effectively reduced using the foaming agent additive for reducing formamide, and a foam foamed therefrom.

### Technical Solution

One embodiment of the present specification provides a foaming agent additive for reducing formamide, the additive including:
a porous zeolite including a plurality of pores; and a metal including a first metal accommodated and impregnated in some or all of the pores.

In addition, according to another embodiment of the present specification,
there is provided a foaming agent composition including: a foaming agent; and the additive for reducing formamide.

In addition, according to another embodiment of the present specification, there is provided a foaming composition including: the foaming agent composition; and a resin to be foamed, wherein the resin to be foamed includes any one selected from the group consisting of polyethylene, polypropylene, polyvinyl chloride, polycarbonate, polystyrene, polyamide, acetal, styrene butadiene rubber, ethylene-vinyl acetate copolymer (EVA), ethylene propylene rubber, thermoplastic elastomer, thermoplastic polyurethane, thermoplastic rubber, ABS resin, rubber, epoxy resin and acrylic resin.

Hereinafter, the present disclosure will be described in more detail. Terms or words used in the present specification and claims are not to be construed as being limited to common or dictionary meanings, and shall be construed as meanings and concepts corresponding to technical ideas of the present disclosure based on a principle that inventors may suitably define the concept of terms in order to describe their invention in the best way.

In addition, "include" used in the present specification specifies specific features, regions, integers, steps, operations, elements and/or components, and does not exclude the presence or addition of other features, regions, integers, steps, operations, elements and/or components.

In the present specification, the "foaming agent additive for reducing formamide" means an additive that removes formamide remaining in a foam and reduces the concentration.

In the present specification, a residual formamide concentration represents a concentration measured for the foaming agent composition including a foaming agent and the foaming agent additive for reducing formamide, without mixing with the resin to be foamed.

In addition, a concentration of formamide remaining in a foamed resin (that is, concentration of formamide remaining in foam) means a concentration measured after mixing the resin to be foamed and the foaming composition.

Hereinafter, the foaming agent additive for reducing formamide, the foaming agent composition using the same, and the foam according to one embodiment of the present disclosure will be described in more detail.

According to one embodiment of the present disclosure, there may be provided a foaming agent additive for reducing formamide, the additive including: a porous zeolite including a plurality of pores; and a metal including a first metal accommodated and impregnated in some or all of the pores.

The metal includes a metal ion, and may be impregnated into some or all of the pores of the porous zeolite as the metal ion.

The inventors of the present disclosure have developed an additive for reducing formamide in which a porous material such as a zeolite is impregnated (supported) with one or more types of metals including Cu, and have identified that, when using the additive in a foaming agent and a final product foam, the concentration of formamide remaining in the foam as well as the foaming agent may all be significantly reduced, thereby completing the present disclosure.

Accordingly, the present specification provides a foaming agent additive for reducing formamide, which is capable of effectively removing formamide specifically among harmful substances generated during forming of a foaming agent (for example, ADCA) and remaining in a foam and reducing the concentration, in the form of a carrier in which some or all of the plurality of pores of the porous zeolite are impregnated (supported) with one or more types of metals in an ion form.

The foaming agent generates N₂, carbon monoxide and ammonia due to thermal decomposition caused by foaming, and when the additive for reducing formamide is added, carbon monoxide is oxidized to carbon dioxide and the porous zeolite traps moisture, and as a result, generation of formamide may be suppressed without side effects of a foaming agent and a foam.

In addition, the additive for reducing formamide is a non-catalytic additive, and used specifically for removing and reducing formamide of a foaming agent and a foam including the foaming agent.

Such an additive for reducing formamide may include a metal of Group 11 as a first metal.

In addition, the additive for reducing formamide may further include one or more types of second metals in addition to the first metal. When the second metal is included together with the first metal, the second metal lowers activation energy, providing additional synergistic effects such as controlling a temperature for formamide concentration reduction and improving foaming magnification.

In other words, the additive for reducing formamide may effectively reduce formamide while having fewer side effects for a final product foamed foam compared to methods using a metal oxide by applying a carrier (for example, CuMnA) in which two or more types of metals are impregnated into a porous zeolite including a plurality of pores to a foaming agent.

Specifically, the first metal may include any one or more metals selected from among metals of Group 11. The first metal may be included in the form of a first metal ion, and may be impregnated into some or all of the porous zeolite pores as the first metal ion.

More specifically, the first metal may be one or more types selected from the group consisting of Cu and Ag. For example, the first metal may include Cu. When the first metal essentially includes Cu, the first metal is favorably impregnated between the pores of the porous zeolite, achieving excellent performance regarding the effect of reducing formamide generated during the foaming of ADCA.

In addition, the metal may further include a second metal that is different from the first metal. Like the first metal, the second metal may be included in the form of a second metal ion, and may be impregnated into some or all of the pores of the porous zeolite as the second metal ion together with the first metal ion.

The second metal may be one or more types selected from the group consisting of metals of Group 1, Group 3 to Group 10, Group 12 and Group 13. More specifically, the second metal may include one or more types selected from the group consisting of Mn, Si, Cr, Ce, Cs, Fe, Co, Zn, Ni, Zr and Al.

In addition, in the present specification, the formamide reduction rate may be effectively improved without side effects by adjusting a weight ratio between the one or more types of metals impregnated into the porous material.

The first metal and the second metal may be included in a weight ratio of 1:9 to 17:0 with respect to the total content of the metal ions.

According to preferred one embodiment, the first metal and the second metal may be included in a weight ratio of 1:9 to 16.9:0.1 with respect to the total content of the metals. In other words, when the metal further includes a second metal, the first metal and the second metal may be included in a weight ratio of 1:0.006 to 1:9 with respect to the total content of the metals.

As the amount of the first metal increases, the formamide reduction rate increases, however, a phenomenon of a foam being damaged due to inhibited crosslinking or a phenomenon of the gas amount being significantly reduced occurs. In addition, when the content of the first metal is too small, there is a problem in that the formamide removal effect is insignificant. Accordingly, the first metal and the second metal need to have the above-mentioned weight ratio to reduce the formamide concentration in a foaming agent and a foam without side effects.

In addition, the formamide reduction rate and side effects of a foam may be controlled depending on each circumstance, and for example, the weight ratio between the first metal and a second metal may be adjusted to 1:0.05 to 1:0.1, 1:0.5 to 1:1, 1:2 to 1:3, 1:4 to 1:9, or 2:1 to 9:1.

In one embodiment, the first metal and the second metal may have a weight ratio of 1:1. When preparing the additive for reducing formamide, the lowest side effects and the highest formamide reduction rate may be obtained when the ratio of the first metal and the second metal impregnated into the porous material zeolite is 1:1.

In addition, the foaming agent additive for reducing formamide includes 83% by weight to 99% by weight of the porous zeolite; and 1% by weight to 17% by weight of the metal ion.

When the content of the metal ion is less than 1% by weight, the content of the metal ion impregnated into the porous zeolite is too small, causing a problem of insignificant formamide removal effect of a foaming agent. In addition, when the content of the metal ion is greater than 17% by weight, there is a problem in that the metal ion remains in the solution for preparing the additive for reducing formamide without being impregnated into the zeolite and is all thrown out as wastewater.

The porous zeolite may have an average particle size of 1 µm to 20 µm, or a particle size of 2 µm to 5 µm. In addition, the porous zeolite may have porosity, which is measured using a BET analysis, of 3 Å to 10 Å.

As the porous zeolite, products such as zeolite 4A may be purchased and used.

The foaming agent additive for reducing formamide may be prepared in a particle form by mixing an aqueous metal sulfur compound solution and the porous zeolite.

Specifically, when preparing the additive for reducing formamide, a material for impregnating the metal into the zeolite in an ion form may be selected from aqueous metal-containing nitric acid and sulfur compound solutions for use, however, using an aqueous metal sulfur compound solution is preferred in terms of stability, handling readiness and economic feasibility.

In other words, some aqueous metal-containing nitric acid solutions are treated as a hazardous substance, and therefore, there is difficulty in storage and a problem may occur in mass production. On the other hand, an aqueous solution using a metal sulfur compound is less expensive than an aqueous metal-containing nitric acid solution and not classified as a hazardous or harmful substance, and therefore, is advantageous in the application.

The additive for reducing formamide may be prepared in a form in which one or more types of metals are impregnated and supported into the pores of the porous zeolite in an ion form through preparing an aqueous metal-containing sulfur compound solution, then adding a porous material thereto, and stirring the mixture.

As the metal sulfur compound, one or more types selected from metal sulfate compounds such as CuSO₄, MnSO₄, CeSO₄ and FeSO₄ may be used.

In the stirring, the stirring means is not particularly limited, and methods generally well known may all be used.

The mixed solution of the aqueous metal sulfur compound solution and the porous material may be stirred for 30 minutes to 2 hours or 45 minutes to 1 hour at 25°C to 50°C or 40°C to 50°C.

After the stirring, the mixed solution is filtered and washed, and then a process of drying the solid may be further included.

The drying process may be performed at a temperature of 120°C or higher, 130°C or higher, or 120°C to 200°C. As the drying means, an oven, a heat-drying ribbon mixer or the like may be used, however, the drying means is not limited thereto.

In addition, according to another embodiment of the present disclosure, there may be provided a foaming agent composition including: a foaming agent; and the additive for reducing formamide.

According to another embodiment, there may be provided a foaming composition including: a resin; and the foaming agent composition. Specifically, there may be provided a foaming composition including the foaming agent composition and a resin to be foamed, wherein the resin to be foamed includes any one selected from the group consisting of polyethylene, polypropylene, polyvinyl chloride, polycarbonate, polystyrene, polyamide, acetal, styrene butadiene rubber, ethylene-vinyl acetate copolymer (EVA), ethylene propylene rubber, thermoplastic elastomer, thermoplastic polyurethane, thermoplastic rubber, ABS resin, rubber, epoxy resin and acrylic resin.

The additive for reducing formamide may be included in the foaming agent to reduce the formamide concentration of the foaming agent itself.

In addition, when the foaming agent composition is applied to the resin to be foamed, the concentration of formamide remaining in the foamed resin after forming the resin to be foamed may also be reduced.

In one embodiment of the present disclosure, the residual formamide concentration of the foaming agent composition may be 10000 ppm or less. In addition, the concentration of formamide remaining in the foamed resin may be 900 ppm or less in the foam.

The foaming agent composition includes 85% by weight to 98% by weight of the foaming agent and 2% by weight to 15% by weight of the additive for reducing formamide.

In other words, the additive for reducing formamide may be included in an amount of 2% by weight to 15% by weight based on the total weight of the foaming agent composition. By including the additive for reducing formamide in the above-mentioned content range in the present disclosure, there may be fewer side effects considering the addition amount used, and the formamide reduction may be maximized.

When the content of the additive for reducing formamide is less than 2% by weight, there is a problem in that the range of formamide concentration reduction decreases. In addition, when the content is greater than 15% by weight, there are problems in that the foaming amount of a foam is reduced as the gas amount of the foaming agent decreases even when the range of formamide concentration reduction increases, and there are changes in the properties by inhibiting crosslinking.

Specifically, the additive for reducing formamide may be included in an amount of 2% by weight to 10% by weight based on the total weight of the foaming agent composition. In this case, side effects are the least, and the range of formamide reduction may increase.

The foaming agent may be an azodicarbonamide (ADCA) particle having an average particle size of 1 µm to 20 µm. Specifically, the foaming agent may be an ADCA particle having an average particle size of 2 µm to 15 µm.

The foaming agent having an average particle size of less than 1 µm may cause a problem of early decomposition of the foaming agent, and when the foaming agent has an average particle size of greater than 20 µm, the foam cell may not be uniform.

The resin is a resin to be foamed to which the foaming agent is applied, and for example, various synthetic or natural resins such as polyethylene (PE), polypropylene (PP), polyvinyl chloride (PVC), polycarbonate (PC), polystyrene (PS), polyamide, acetal, styrene butadiene rubber (SBR), ethylene-vinyl acetate copolymer (EVA), ethylene propylene rubber (ethylene propylene diene monomer rubber: EPDM), thermoplastic elastomer (TPE), thermoplastic polyurethane (TPU), thermoplastic rubber (TPR), ABS resin (acrylonitrile butadiene styrene copolymer), rubber, epoxy resin and acrylic resin may be used. Specifically, the resin to be foamed may be EVA. In one embodiment of the present disclosure, the foaming agent composition may further include an additive.

The additive may include one or more types selected from the group consisting of, for example, calcium compounds such as calcium stearate and calcium carbonate (CAS No. 471-34-1), zinc compounds such as zinc oxide and zinc stearate, titanium or tin compounds such as titanium dioxide and tin methoxy maleate, barium compounds such as barium stearate and barium ricinoleate, magnesium compounds such as magnesium oxide, talc, monosodium citrate, urea, silica, dicyclohexyl phthalate and stearic acid. The calcium compound may improve flowability of the foaming agent, the zinc compound may facilitate the decomposition temperature, and the titanium or tin compound may improve whiteness of a foam.

The content of the additive may be within a range well known in the art, and therefore, is not particularly limited, and for example, the additive may be included in an amount of 0.1 parts by weight to 10 parts by weight with respect to 100 parts by weight of the foaming agent composition.

Meanwhile, according to another embodiment of the present disclosure, there may be provided a foam in which the concentration of formamide remaining in the resin foamed by the foaming of the foaming composition is 900 ppm or less.

When manufacturing the foam using the foaming agent additive for reducing formamide according to the present disclosure, the content of formamide remaining in the foam may be reduced to 1000 ppm or less, which is a level required by the industry, more effectively than before without side effects of the foamed foam and changes in the foaming properties.

Specifically, the concentration of formamide remaining in the foamed resin in the foam may be reduced to 900 ppm or less, 850 ppm or less, 600 ppm or less, 500 ppm or less, 400 ppm or less, 350 ppm or less, 300 ppm or less, 250 ppm or less, 200 ppm or less, 100 ppm or less, 50 ppm or less, 40 ppm or less or 30 ppm or less.

### Advantageous Effects

A foaming agent additive for reducing formamide according to the present disclosure is capable of significantly reducing a concentration of formamide generated during foaming of a foaming agent (for example, ADCA) by impregnating one or more types of metals into a porous zeolite.

In addition, the additive for reducing formamide is also capable of reducing a concentration of formamide remaining in a final product foam including a foaming agent (for example, ADCA) and a resin to 900 ppm or less, thereby reducing environmental problems caused by formamide release.

### Best Mode

Hereinafter, examples are presented to help understand the present disclosure. However, the following examples are for illustrative purposes only, and the present disclosure is not limited thereto.

### <Examples 1 to 20 and Comparative Examples 1 to 7: Preparation of Foaming Agent Additive for Reducing Formamide>

Metal sulfate compounds of CuSO₄, MnSO₄, CeSO₄, FeSO₄, Cs₂SO₄, COSO₄ • H₂O, ZnSO₄, NiSO₄, Zr(SO₄)₂, Al₂(SO₄)₃ and Si(SO₄)₂ were prepared.

Subsequently, the metal sulfate compounds were dissolved in water so that the first metal or the first metal and the second metal are included in the composition and the content as shown in Table 1 with respect to the weight of zeolite, and then all were dissolved by stirring for 30 minutes, and as a result, each of aqueous metal sulfate solutions including one or two types of metals was prepared.

After that, zeolite 4A (product of Cosmo Catalysts Co., Ltd.) was added to the aqueous metal sulfate solution, and after stirring the mixture for 2 hours, the result was filtered, and then washed with water.

Herein, when the zeolite is fully impregnated with the metals, discoloration of the zeolite and wastewater was identified, and the filtered and washed zeolite was dried for 4 hours or longer in a vacuum oven at a temperature of 130°C or higher to prepare an additive.

In addition, when two types of metals are included, a method of mixing the two types of corresponding aqueous metal sulfate solutions, and then adding zeolite thereto was used.

Comparative Example 4 used a method of mixing an aqueous silicon(IV) chloride solution and an aqueous CoSO₄*H₂O solution, and then adding zeolite thereto.

### <Examples 21 to 42 and Comparative Examples 8 to 17; Preparation of Foaming Agent Composition>

Each of foaming agent compositions of Examples 21 to 42 and Comparative Examples 8 to 17 was prepared using the following azodicarbonamide (ADCA) and each of the additives for reducing formamide of Examples 1 to 20 and Comparative Examples 1 to 7 in the composition and the content of Table 2.
* Azodicarbonamide (ADCA): dry product purity 100% particle size 6 um to 9 um (Unicell D600, manufacturer: Dongjin Semichem Co., Ltd.) foaming properties DT: 206 GV: 240 mL/g 210 was used

After that, each foam was manufactured using the following method.

### Comparative Example 8

After adding 5 parts by weight (phr) of a foaming agent composition formed only with ADCA with respect to 100 parts by weight of EVA sole, 10 parts by weight (phr) of hard charcoal, 1 part by weight of ZnO, 1 part by weight of stearic acid and 1 part by weight (phr) of a crosslinking agent were applied thereto as additives to prepare a foaming composition (EVA composition), and then the foaming composition was prepared into a sheet form through a roller. After that, the sheet was foamed for 12 minutes at 175°C in a press with a pressure of 150 kgf/cm² to manufacture a foam.

### Comparative Example 9

A foam was manufactured in the same manner as in Comparative Example 8, except that a foaming agent composition including 84% by weight of ADCA and 16% by weight of the additive for reducing formamide of Example 8 was used.

However, a phenomenon of foam defects caused by a decrease in foaming magnification and poor crosslinking was identified in Comparative Example 9.

### Comparative Example 10

A foam was manufactured in the same manner as in Comparative Example 8, except that a foaming agent composition including 99% by weight of ADCA and 1% by weight of the additive for reducing formamide of Example 8 was used.

### Comparative Examples 11 to 17

Foams were each manufactured in the same manner as in Comparative Example 8, except that a foaming agent composition including ADCA and each of the additives for reducing formamide of Comparative Examples 1 to 7 according to the composition and the content of the following Table 2 was used.

### Example 21

A foaming agent composition was prepared by mixing 90% by weight of ADCA and 10% by weight of the additive for reducing formamide of Example 1.

After adding 5 parts by weight (phr) of the foaming agent composition with respect to 100 parts by weight EVA sole, 10 parts by weight of hard charcoal, 1 part by weight of ZnO, 1 part by weight of stearic acid and 1 part by weight of a crosslinking agent were applied thereto as additives to prepare a foaming composition (EVA composition), and then the foaming composition was prepared into a sheet form through a roller. After that, the sheet was foamed for 12 minutes at 175°C in a press with a pressure of 150 kgf/cm² to manufacture a foam.

### Examples 22 to 42

Foams were each manufactured in the same manner as in Example 21, except that a foaming agent composition including ADCA and each of the additives for reducing formamide of Examples 2 to 12 according to the composition and the content of the following Table 2 was used.

### <Experimental Example>

### Method of Formamide Analysis

The residual formamide concentration for the foaming agent composition and the foam, and the concentration of formamide remaining in the EVA foam of each of Examples 22 to 42 and Comparative Examples 8 to 17 were analyzed using the following method, and the results are shown in Table 2.
1) The foamed foam was cut into small pieces of 5 mm x 5 mm, and then 2 g of the foam was introduced to 20 mL of acetone, a solvent.
2) The sample prepared in 1) was dispersed for 1 hour in water at 40°C using a sonicator.
3) A small amount of the acetone was collected from the dispersion of 2), and the formamide concentration was analyzed using GC-MS.

### * Residual formamide concentration:

Analyzed formamide concentration of the material remaining when foaming the ADCA foaming agent composition itself instead of applying the ADCA to the resin

### * Concentration of formamide remaining in EVA foam:

Concentration of formamide remaining in the foam produced when the ADCA was mixed with the EVA and foamed (that is, concentration of formamide remaining in the foam when the EVA and the foaming agent composition were mixed and then foamed)

**[Table 1]**

| | Additive (Additive for Reducing Formamide) | | | | | |
|---|---|---|---|---|---|---|
| | Porous Material | First Metal | Second Metal | Porous Material (% by weight) | First Metal (% by weight) | Second Metal (% by weight) |
| Comparative Example 1 | Zeolite 4A | Cu | | 99.5 | 0.5 | |
| Comparative Example 2 | Zeolite 4A | Cu | | 82 | 18 | |
| Comparative Example 3 | Zeolite 4A | Al | Mn | 90 | 5 | 5 |
| Comparative Example 4 | Zeolite 4A | Si | Co | 90 | 5 | 5 |
| Comparative Example 5 | Zeolite 4A | Ce | Ni | 90 | 5 | 5 |
| Comparative Example 6 | Zeolite 4A | Cs | Fe | 90 | 5 | 5 |
| Comparative Example 7 | Zeolite 4A | Cu | Mn | 90 | 0.5 | 9.5 |
| Example 1 | Zeolite 4A | Cu | | 83 | 17 | |
| Example 2 | Zeolite 4A | Cu | | 90 | 10 | |
| Example 3 | Zeolite 4A | Cu | | 95 | 5 | |
| Example 4 | Zeolite 4A | Cu | | 99 | 1 | |
| Example 5 | Zeolite 4A | Cu | Mn | 90 | 1 | 9 |
| Example 6 | Zeolite 4A | Cu | Mn | 95 | 2.5 | 2.5 |
| Example 7 | Zeolite 4A | Cu | Mn | 91 | 3 | 6 |
| Example 8 | Zeolite 4A | Cu | Mn | 90 | 5 | 5 |
| Example 9 | Zeolite 4A | Cu | Mn | 91 | 6 | 3 |
| Example 10 | Zeolite 4A | Cu | Mn | 83 | 8.5 | 8.5 |
| Example 11 | Zeolite 4A | Cu | Mn | 90 | 9 | 1 |
| Example 12 | Zeolite 4A | Cu | Mn | 90 | 9.5 | 0.5 |
| Example 13 | Zeolite 4A | Cu | Cs | 90 | 5 | 5 |
| Example 14 | Zeolite 4A | Cu | Fe | 90 | 5 | 5 |
| Example 15 | Zeolite 4A | Cu | Ce | 90 | 5 | 5 |
| Example 16 | Zeolite 4A | Cu | Co | 90 | 5 | 5 |
| Example 17 | Zeolite 4A | Cu | Zn | 90 | 5 | 5 |
| Example 18 | Zeolite 4A | Cu | Ni | 90 | 5 | 5 |
| Example 19 | Zeolite 4A | Cu | Zr | 90 | 5 | 5 |
| Example 20 | Zeolite 4A | Cu | Al | 90 | 5 | 5 |

**[Table 2]**

| | Used Resin | Foaming Agent Composition | | | Residual Formamid e Concentr ation (ppm) | Concentrat ion of Formamide Remaining in EVA (ppm) |
|---|---|---|---|---|---|---|
| | | ADCA (% by weigh t) | Additive for Reducing Formamide (% by weight) | | | |
| Comparative Example 8 | EVA | 100 | - | 0 | 12000 | 1300 |
| Comparative Example 9 | EVA | 84 | Example 8 | 16 | 2000 | 30 |
| Comparative Example 10 | EVA | 99 | Example 8 | 1 | 11000 | 900 |
| Comparative Example 11 | EVA | 90 | Comparative Example 1 | 10 | 11000 | 1200 |
| Comparative Example 12 | EVA | 90 | Comparative Example 2 | 10 | 2150 | 450 |
| Comparative Example 13 | EVA | 90 | Comparative Example 3 | 10 | 12000 | 1300 |
| Comparative Example 14 | EVA | 90 | Comparative Example 4 | 10 | 12000 | 1300 |
| Comparative Example 15 | EVA | 90 | Comparative Example 5 | 10 | 12000 | 1300 |
| Comparative Example 16 | EVA | 90 | Comparative Example 6 | 10 | 12000 | 1300 |
| Comparative Example 17 | EVA | 90 | Comparative Example 7 | 10 | 11000 | 1100 |
| Example 21 | EVA | 90 | Example 1 | 10 | 2150 | 450 |
| Example 22 | EVA | 90 | Example 2 | 10 | 2500 | 480 |
| Example 23 | EVA | 90 | Example 3 | 10 | 4800 | 850 |
| Example 24 | EVA | 90 | Example 4 | 10 | 9000 | 900 |
| Example 25 | EVA | 90 | Example 5 | 10 | 3500 | 350 |
| Example 26 | EVA | 90 | Example 6 | 10 | 2000 | 300 |
| Example 27 | EVA | 90 | Example 7 | 10 | 3000 | 250 |
| Example 28 | EVA | 90 | Example 8 | 10 | 2000 | 30 |
| Example 29 | EVA | 90 | Example 9 | 10 | 2200 | 120 |
| Example 30 | EVA | 90 | Example 10 | 10 | 2000 | 30 |
| Example 31 | EVA | 90 | Example 11 | 10 | 2500 | 120 |
| Example 32 | EVA | 90 | Example 12 | 10 | 2500 | 480 |
| Example 33 | EVA | 85 | Example 8 | 15 | 2000 | 30 |
| Example 34 | EVA | 98 | Example 8 | 2 | 3600 | 430 |
| Example 35 | EVA | 90 | Example 13 | 10 | 4800 | 850 |
| Example 36 | EVA | 90 | Example 14 | 10 | 4800 | 850 |
| Example 37 | EVA | 90 | Example 15 | 10 | 4800 | 850 |
| Example 38 | EVA | 90 | Example 16 | 10 | 4800 | 850 |
| Example 39 | EVA | 90 | Example 17 | 10 | 4800 | 850 |
| Example 40 | EVA | 90 | Example 18 | 10 | 4800 | 850 |
| Example 41 | EVA | 90 | Example 19 | 10 | 4800 | 850 |
| Example 42 | EVA | 90 | Example 20 | 10 | 4800 | 850 |

As shown in the results of Table 2, since Examples 21 to 42 used the additives for reducing formamide of Examples 1 to 20 in which zeolite was impregnated with a Cu ion as the first metal in a specific content range, a residual formamide concentration was low in overall compared to Comparative Examples 8 to 17, and all of Examples 21 to 42 had a concentration of formamide remaining in EVA in the EVA foam of 900 ppm or less, satisfying the level of 1000 ppm or less required by the industry. On the other hand, Comparative Example 8 included only ADCA, and the residual formamide concentration and the concentration of formamide remaining in EVA were all high.

In addition, although Comparative Example 9 had reduced residual formamide concentration and reduced concentration of formamide remaining in EVA by using the additive for reducing formamide of Example 8, the content of the additive for reducing formamide was 16% by weight, which is too high outside the scope of the disclosure of the present application, resulting in a decrease in the foaming magnification and poor crosslinking. Accordingly, Comparative Example 9 caused a problem in that the foam was damaged and not able to properly perform the function.

In Comparative Example 10, the concentration of formamide remaining in EVA was 1000 ppm or less, however, the content of the additive for reducing formamide was 1% by weight which was too low, and the formamide reduction figure was low, resulting in insignificant formamide removal effect compared to the Examples.

In addition, Comparative Example 11 using the additive of Comparative Example 1 in which Cu, the first metal, was impregnated too little in the content of 0.5% by weight (that is, additive for reducing formamide in which 0.5% by weight of Cu, the first metal, was impregnated into 99.5% by weight of zeolite 4A in an ion form) had a low formamide reduction amount.

In Comparative Example 12 using the additive of Comparative Example 2 in which Cu, the first metal, was impregnated too much in the content of 18% by weight (that is, additive for reducing formamide in which 18% by weight of Cu, the first metal, was impregnated into 82% by weight of zeolite 4A in an ion form), 17% or more of the Cu was not impregnated and 1% or more of the Cu remained in the waste liquid.

Comparative Examples 13 to 16 showed a concentration of formamide remaining in EVA of 1100 ppm or greater by using the additives for reducing formamide of Comparative Examples 3 to 6 in which the first metal impregnated into the zeolite did not include a Cu ion.

In Comparative Example 17 using the additive for reducing formamide of Comparative Example 7 in which 0.5% by weight Cu, the first metal, and 9.5% by weight of Mn, the second metal, were impregnated into 90% by weight of zeolite 4A in an ion form, the ratio of Cu ion that is the first metal was less than 1% by weight which was too low even when the additive for reducing formamide included a Mn ion that is the second metal ion, resulting in a poorer reduced concentration of formamide remaining in EVA than Comparative Example 11.

## Claims

1. A foaming agent additive for reducing formamide, the additive comprising:
a porous zeolite including a plurality of pores; and
a metal including a first metal accommodated and impregnated in some or all of the pores.

2. The foaming agent additive for reducing formamide of claim 1, wherein the first metal includes any one or more metals selected from among metals of Group 11.

3. The foaming agent additive for reducing formamide of claim 1, wherein the first metal includes Cu.

4. The foaming agent additive for reducing formamide of claim 1, wherein the metal further includes a second metal that is different from the first metal.

5. The foaming agent additive for reducing formamide of claim 4, wherein the second metal includes one or more types selected from the group consisting of metals of Group 1, Group 3 to Group 10, Group 12 and Group 13.

6. The foaming agent additive for reducing formamide of claim 4, wherein the second metal includes one or more types selected from the group consisting of Mn, Si, Cr, Ce, Cs, Fe, Co, Zn, Ni, Zr and Al.

7. The foaming agent additive for reducing formamide of claim 4, wherein the first metal and the second metal are included in a weight ratio of 1:9 to 16.9:0.1 with respect to a total content of the metals.

8. The foaming agent additive for reducing formamide of claim 1, which includes: 83% by weight to 99% by weight of the porous zeolite; and 1% by weight to 17% by weight of the metal.

9. The foaming agent additive for reducing formamide of claim 1, wherein the porous zeolite has an average particle size of 1 µm to 20 µm.

10. A foaming agent composition comprising:
a foaming agent; and
the additive for reducing formamide of claim 1.

11. The foaming agent composition of claim 10, which includes: 85% by weight to 98% by weight of the foaming agent; and 2% by weight to 15% by weight of the additive for reducing formamide.

12. The foaming agent composition of claim 10, wherein the foaming agent includes azodicarbonamide (ADCA) having an average particle size of 1 µm to 20 µm.

13. A foaming composition comprising:
the foaming agent composition of claim 10; and
a resin to be foamed,
wherein the resin to be foamed includes any one selected from the group consisting of polyethylene, polypropylene, polyvinyl chloride, polycarbonate, polystyrene, polyamide, acetal, styrene butadiene rubber, ethylene-vinyl acetate copolymer (EVA), ethylene propylene rubber, thermoplastic elastomer, thermoplastic polyurethane, thermoplastic rubber, ABS resin, rubber, epoxy resin and acrylic resin.
